# EUROPÄISCHE PATENTSCHRIFT

(11) **EP 2 325 113 B1**
(45) Veröffentlichungstag und Bekanntmachung des Hinweises auf die Patenterteilung: **17.04.2013**
(21) Anmeldenummer: 10190650.1
(22) Anmeldetag: 10.11.2010
(51) Int. Cl.: B65G 17/20, B65G 17/32, B65G 23/14

(54) **Transportorgan zum Fördern von Druckprodukten**
Transport body for transporting printed products
Organe de transport pour le transport de produits imprimés

(30) Priorität: 18.11.2009 CH 17802009
(43) Veröffentlichungstag der Anmeldung: 25.05.2011
(73) Patentinhaber: Müller Martini Holding AG, 6052 Hergiswil (CH)
(72) Erfinder: Oppliger, Jean-Claude, 8155, Niederhasli (CH); Landolt, Michael, 4665, Oftringen (CH); Kluser, Tony, 6003, Luzern (CH)
(74) Vertreter: Liebe, Rainer

(56) Entgegenhaltungen:
- EP-A1- 1 557 387
- CH-A5- 588 647
- CH-A5- 683 989
- DE-A1- 1 556 234
- DE-A1-102006 008 657

## Beschreibung

### Technisches Gebiet

Die Erfindung betrifft ein Transportorgan zum Fördern von Druckprodukten, wobei das Transportorgan im Wesentlichen aus einer für eine vorgegebene Strecke konzipierte Förderkette besteht, welche im Wesentlichen aus einer Anzahl von miteinander koppelbaren Funktionseinheiten besteht, gemäss Oberbegriff des Anspruchs 1.

### Stand der Technik

Derartige Förderketten werden zum Transport von Druckprodukten zwischen einzelnen Verarbeitungsstationen, wie etwa Einsteckmaschinen, Adressiervorrichtungen, Klebeapparate od. dgl. benutzt. Dabei werden die Druckprodukte üblicherweise von an den Kettengliedern montierten Greifern gehalten und ggf. an den Verarbeitungsstationen aus den Greifern gelöst. Zur Gewährleistung eines kontinuierlichen Betriebs sind die Kettenglieder der Förderkette üblicherweise endlos umlaufend längs der Förderstrecke antreibbar. Die Förderkette wird längs der Förderstrecke mit geeigneten Führungsanordnungen bzw. Führungsschienen geführt, welche auch Kurven der Förderstrecke bestimmen können. Zur Sicherstellung der Bewegbarkeit der Kettenglieder längs der Förderstrecke müssen diese gelenkig i. a. um zwei Achsen unabhängig voneinander verschwenkbar miteinander gekoppelt sein. Die Förderstrecke kann eine Länge von 100 m oder mehr aufweisen. Entsprechend aufwendig ist die Montage der Führungsschienenanordnungen und der Kettenglieder, wobei über die gesamte Förderkettenlänge die gelenkige Verbindung zwischen den einzelnen Kettengliedern sichergestellt sein muss.

Bei in der CH 588 647 A5 beschriebenen Förderketten soll die Montage von über Kugelgelenke miteinander verbundenen Kettengliedern dadurch erleichtert werden, dass Gelenkpfannen und Gelenkkörper als äquatoriale Kugelsegmente ausgebildet sind. Der Gedanke äquatorial geteilter Kugelsegmente wird auch in der CH 646 762 A5 und der CH 656 683 A5 aufgegriffen. Allerdings wird durch diese Konstruktion gelenkiger Verbindungen zwischen einzelnen Kettengliedern die Montage der Förderketten an oder in den Förderschienen nicht wesentlich vereinfacht.

Eine gewisse Vereinfachung ergibt sich bei der Montage von Förderketten gemäss der CH 593 187, bei der Kettenglieder aus Kunststoff durch quer zu ihrer Längsrichtung ausgerichtete Schwenkachsen und Naben lösbar miteinander verbunden sind und zusätzliche Teile an Befestigungselementen der Kettenglieder lösbar angebracht sind. Allerdings bereitet auch bei den in dieser Schrift beschriebenen Förderketten die Montage der Kettenglieder an bzw. in den Führungsschienenanordnungen bzw. Führungsschienen beachtliche Probleme. Eine gewisse Montagevereinfachung ergibt sich bei Förderketten gemäss der US 4,638,906, bei denen die einzelnen Kettenglieder durch Verdrehen um eine parallel zur Förderrichtung verlaufende Drehachse voneinander gelöst werden können. Allerdings müssen dafür entsprechende Öffnungen in der Führungsschiene vorgesehen sein.

Bei einer in der EP 1 832 532 A2 beschriebenen Förderkette soll eine Montageerleichterung dadurch erreicht werden, dass das Lagergehäuse auf zwei Lagergehäuseteilen steht, welche einen kugeligen Lagerkörper übergreifen, um so ein Kugelgelenk zu bilden. Auch hier wird wieder der Gedanke aufgegriffen, die Lagerkörper in Äquatorialebenen zu teilen.

Endlich wird in der EP 1 557 387 A1 auch noch vorgeschlagen, kostengünstige Förderketten dadurch bereitzustellen, dass an jedem Kettenglied der Förderkette wenigstens zwei Klammern oder Greifer zum Erfassen jeweils eines Druckprodukts angebracht sind.

Wie der vorstehenden Erläuterung bekannter Förderketten zum Fördern von Druckprodukten zu entnehmen ist, bereitet die Montage entsprechender Förderketten längs einer durch eine Führungsschienenanordnung vorgegebenen Förderstrecke unter gleichzeitiger Gewährleistung einer ausreichenden Bewegbarkeit der Förderkette längs einer kurvigen Förderstrecke beachtliche Probleme.

Aus der dem Oberbegriff des anspruchs 1 entsprechenden DE 15 56 234 A1 geht eine Förderlaufbahn hervor, welche aus einer rohrförmigen Laufbahn besteht, welche die Aufnahme der Förderglieder bildet. Diese rohrförmige Förderlaufbahn ist an der Tragplattform des Antriebes starr befestigt. Es lassen sich grundsätzlich zwei Glieder ausmachen, welche sequentiell über eine verhältnismässig längere Strecke miteinander gekoppelt sind. Wesentlich ist hier die Tatsache, dass jedes Glied mit Rollen ausgestattet ist, welche zueinander kreuzbildend disponiert sind (Seiten 19/20).

Diese Glieder (Pos. 34, 36) sind durch dazwischen geschaltete Universalkupplungselemente miteinander drehbar verbunden. Diejenigen in horizontalen Achsen sind an den benachbarten senkrechten Gliedern (Pos. 34), und diejenigen in senkrechten Achsen sind an den benachbarten horizontalen Gliedern (Pos. 36) drehbar gelagert.

Eine solche Konstruktion lässt sich nur betreiben, wenn grössere Spiele zwischen den Rollen und der Innenwand der umliegenden rohrförmigen Förderlaufbahn vorgesehen werden, was auch damit zusammenhängt, dass der Radabstand der Rollen zueinander verhältnismässig lang ist.

### Darstellung der Erfindung

Hier will die Erfindung Abhilfe schaffen. Der Erfindung, wie sie in den Ansprüchen gekennzeichnet ist, liegt die Aufgabe zugrunde, bei einem Transportorgan der eingangs genannten Art eine durch Einfachheit geprägte Ausführung vorzuschlagen und deren primäre Herstellung kostengünstig zu gestalten. Darüber hinaus ist es Aufgabe der Erfindung die Lebensdauer von einer Anzahl Kettenglieder gebildete Förderkette entscheidend zu verlängern und deren Geräuschbildung im Betrieb zu minimieren.

Erfindungsgemäss wird diese Aufgabe durch ein Transportorgan mit den Merkmalen des Anspruchs gelöst.

Damit soll zugrundegelegt werden, dass die Förderkette als solche aus einer Anzahl sogenannten Fördereinheiten besteht, und dass jede Fördereinheit aus einem ersten Kettenglied und einem zweiten Kettenglied besteht, womit auch gleichzeitig feststeht, dass die einzelnen Fördereinheiten auch in einer Wirkverbindung zueinander stehen, unabhängig davon, welche Verbindungsart bei den einzelnen Elementen zur Anwendung gelangt.

Die ansonsten benötigte körperliche Beweglichkeit der Förderkette längs einer kurvigen Förderstrecke kann bei den erfindungsgemässen Förderketten dadurch sichergestellt werden, dass die Bildung einer Förderkettenanordnung durch miteinander koppelbare Funktionseinheiten starr oder gelenkig miteinander bewerkstelligt wird. Auf die Verbindung der die Funktionseinheit bildenden Kettenglieder wird weiter unten näher eingegangen. Bei der Montage der erfindungsgemässen Förderketten können Förderkettenabschnitte mit einer Anzahl von Gelenkanordnungen und/oder Förderkettenanordnungen vorkonfektioniert und in eine Führungsschienenanordnung eingefädelt werden. Benachbarte Funktionseinheiten können dann zur Bildung einer Förderkettenanordnung starr miteinander verbunden werden. Insgesamt ergibt sich dadurch eine deutliche Montagevereinfachung, weil die für die Gewährleistung der Funktionssicherheit der Förderkette benötigten gelenkigen Verbindungen schon bei der Konfektionierung der Förderkette am Produktionsort hergestellt werden und während der Montage am Montageort nur noch starre Verbindungen zwischen einzelnen Funktionseinheiten gebildet werden müssen.

Im Hinblick auf die von jeweils zwei Kettengliedern, geforderten unterschiedlichen Funktionen, wie etwa die Antriebsfunktion und die Führungsfunktion, hat es sich als günstig erwiesen, wenn die durch die Verbindung zweier Kettenglieder gebildete Funktionseinheit ein als ersten Funktionsglied ausgeführtes Kettenglied und ein davon unterscheidbares, als zweites Funktionsglied ausgeführtes Kettenglied aufweist, weil so einzelne Funktionen einzelnen Kettengliedern zugeordnet werden können, was insgesamt zu einer Funktionsverbesserung und/oder Verbesserung der Betriebszuverlässigkeit erfindungsgemässer Förderketten führt. Zur Bildung einer starren Verbindung zwischen den einzelnen Kettengliedern einer Funktionseinheit hat es sich als günstig erwiesen, wenn diese Kettenglieder in einem Verbindungsbereich formschlüssig ineinandergreifen, insbesondere miteinander verhakt sind, wobei die formschlüssige Verbindung über ein lösbares Verbindungselement gesichert sein kann. Eine gleiche oder ähnliche Verbindung lässt sich auch bei den Funktionseinheiten zueinander vorsehen.

Die Verbindungsbereiche der einzelnen Kettenglieder gegenüber der sequentiell benachbarten können durch quer zur Förderrichtung verlaufende hakenförmige Vorsprünge erfolgen, die bei der formschlüssigen Verbindung ineinandergreifen. Dabei kann der Verbindungsbereich eines der Kettenglieder den Verbindungsbereich des anderen Kettengliedes in Förderrichtung übergreifen, um so eine sichere Verbindung herzustellen. Das Verbindungselement kann besonders einfach in Form eines eine Ausnehmung in einem der Kettenglieder durchsetzenden und in einem in dem anderen Kettenglied aufgenommenen Gewinde eingeschraubten Schraubbolzen aufweisen, wobei der Schraubbolzen zweckmässigerweise mit einem an der dem Gewinde entgegengesetzten Seite angeordneten Bolzenkopf zumindest mittelbar an einem Kettenglied anliegt.

Bei der Montage erfindungsgemässer Förderketten können die einzelnen Kettenglieder einer Funktionseinheit demnach zunächst durch den formschlüssigen Eingriff im Verbindungsbereich positioniert und dann in dieser Position mit dem Verbindungselement arretiert werden. Es hat sich gezeigt, dass die Montage erfindungsgemässer Förderketten besonders einfach durchgeführt werden kann, wenn sich die Bolzenachse des Schraubbolzens quer, insbes. senkrecht, zur Förderrichtung erstreckt, weil durch diese Anordnung besonders viel Platz für Montagemöglichkeiten, insbesondere Montageöffnungen, in Führungsschienenanordnungen bereitgestellt werden kann. Derartige in Förderrichtung der Führungsschienenanordnung verlaufende schlitzförmige Öffnungen werden innerhalb von Führungsschienenanordnungen schon für die zum Transportieren der Druckprodukte benötigten Funktionseinrichtungen, wie etwa Greifern oder Klammern, benötigt, die sich ausgehend von der Förderkette in einer quer zur Förderrichtung verlaufenden Richtung erstrecken und ausserhalb der Führungsschienen frei zugänglich sein müssen.

Im Hinblick auf diese Anordnung der Funktionseinrichtungen hat es sich im Hinblick auf die gewünschte einfache Montage als besonders sinnvoll erwiesen, wenn der zum Verbinden der Kettenglieder eingesetzte Schraubbolzen auf seiner dem Gewinde abgewandten Seite eine zum Ankoppeln einer sich quer zur Förderstrecke erstreckenden Funktionseinrichtung, wie etwa eines Greifers, einer Klammer oder dgl., ausgelegte Verbindungseinrichtung durchsetzt. Dabei kann die Verbindungseinrichtung als Bestandteil der Funktionseinrichtung fest damit verbunden sein. Im Hinblick auf die oft angestrebte hohe Modularität von mit erfindungsgemässen Förderketten ausgestatteten Anlagen hat es sich als günstig erwiesen, wenn die Verbindungseinrichtung einen Adapter bildet, mit dem die Funktionseinrichtung an die Förderkette gekoppelt werden kann, wobei zum Ankoppeln unterschiedlicher Funktionseinrichtungen unterschiedliche Verbindungseinrichtungen bzw. Adapter zum Einsatz kommen können.

Wie vorstehend bereits angesprochen, ist der Einsatz voneinander unterscheidbarer Kettenglieder im Hinblick auf die angestrebte Optimierung der einzelnen Funktionen der Förderkette besonders hilfreich. In diesem Zusammenhang hat es sich als zweckmässig erwiesen, wenn das erste Kettenglied einen zum Ankoppeln der Förderkette an eine Antriebseinrichtung ausgelegten Ankopplungsbereich und das zweite Kettenglied eine zum Führen der Förderkette längs einer Führungsschienenanordnungen ausgelegte Führungseinrichtung aufweist. Durch diese Trennung von Förderfunktion einerseits und Führungsfunktion andererseits wird eine Verbesserung der Betriebszuverlässigkeit erfindungsgemässer Förderketten erreicht, weil übliche Antriebseinrichtungen im Bereich der Führungseinrichtungen an den Förderketten angreifen, wie bspw. bei dem in der EP 0 540 866 A2 beschriebenen Kettenantrieb, so dass die Führungselemente durch die gleichzeitige Antriebsfunktion einem erhöhten Verschleiss unterliegen.

Darüber hinaus erfordert der herkömmliche Antrieb von Förderketten im Bereich der Führungseinrichtungen einen Eingriff der Fördereinrichtung im Bereich der Führungsschienen bzw. Führungsschienenanordnung und in vielen Fällen auch die Umschlingung eines Antriebselements durch die Förderkette. Bei der erfindungsgemäss vorgesehenen Trennung von Ankopplungsbereich für die Fördereinrichtung einerseits und Führungseinrichtung andererseits kann der Kettenantrieb völlig unabhängig von der Führungsfunktion und der Förderfunktion für die Druckprodukte verwirklicht werden. Dadurch wird eine weitere Funktionsoptimierung erreicht.

Im Hinblick auf die Bereitstellung eines besonders grossen Bauraums für die an die Förderkette anzukoppelnden Funktionseinrichtungen hat es sich als besonders sinnvoll erwiesen, wenn der Ankopplungsbereich für die Antriebseinrichtung an der dem zum Ankoppeln der Funktionseinrichtung, ggf. über eine Verbindungseinrichtung, dienenden Bolzenkopf entgegengesetzten Seite der Funktionsanordnung angeordnet ist, so dass bei unterhalb der Förderkette hängenden Funktionseinrichtungen, wie etwa Greifern, die Antriebseinrichtung oberhalb der Förderkette angeordnet werden kann und mit den in dieser Lage nach oben von der Förderkette wegragenden Ankopplungsbereichen zusammenwirkt.

Der Ankopplungsbereich kann baulich besonders einfach verwirklicht werden, wenn er kammartig mit sich quer, insbes. etwa senkrecht, zur Förderrichtung erstreckenden Kammzinken ausgeführt ist. In die Zwischenräume zwischen diesen Kammzinken können die Kettenbolzen einer Antriebskette zum Zweck des Antriebs der Förderkette eingreifen. Dabei ist auch keine Umschlingung eines Antriebsrads durch die Förderkette erforderlich. Vielmehr kann der Antrieb der Förderkette auch längs eines geradlinig verlaufenden Abschnitts der Förderstrecke erfolgen. Dazu ist es allerdings zweckmässig, wenn die Förderkette auf der der Fördereinrichtung entgegengesetzten Seite auf und/oder in einer Führungsschienenanordnung abgestützt ist. Zu diesem Zweck weist die Führungseinrichtung des zweiten Kettengliedes zweckmässigerweise mindestens eine, vorzugsweise zwei, drei oder mehr bezüglich entsprechender Rollenachsen drehbar gelagerte Führungsrollen auf. Dabei kann die angestrebte Funktionstrennung zwischen Antriebsfunktion einerseits und Führungsfunktion andererseits besonders wirkungsvoll herbeigeführt werden, wenn alle Führungsrollen auf der der zum Ankoppeln einer Funktionseinrichtung, wie etwa eines Greifers, verwendeten Verbindungseinrichtung zugewandten Seite des zum Ankoppeln der Antriebseinrichtung ausgelegten Ankopplungsbereich angeordnet sind, so dass ausserhalb der Führungsrollen frei auf den Ankopplungsbereich zugegriffen werden kann.

Erfindungsgemäß sind Führungsrollen bezüglich einer gemeinsamen, quer, insbes. senkrecht zur Förderstrecke bzw. Förderrichtung verlaufenden ersten Rollenachse drehbar gelagert, wobei zwei weitere Führungsrollen bezüglich einer quer, insbesondere etwa senkrecht, zu der durch die Förderrichtung und die erste Rollenachse aufgespannten Ebene gemeinsamen zweiten Rollenachse drehbar gelagert sind. Zum Erhalt eines symmetrischen Aufbaus können die Führungsrollen auf den Seiten eines Quaders angeordnet sein, längs dessen Seitenhalbierenden die Rollenachsen verlaufen.

Dabei hat es sich wiederum im Sinne einer kompakten Bauweise als besonders zweckmässig erwiesen, wenn mindestens eine Führungsrolle auf einem Führungszapfen des zweiten Funktionsglieds drehbar gelagert ist, weil so die gewünschte Führungsfunktion ohne durchgehende körperliche Rollenachsen verwirklicht werden kann, wobei die drehbare Lagerung bezüglich einer gemeinsamen geometrischen Rollenachse auch dann noch gewährleistet werden kann, wenn zwischen einzelnen zur drehbaren Lagerung der Führungsrollen dienenden Bereichen des zweiten Funktionsglieds weitere funktionale Bereiche des Kettenglieds angeordnet sind.

Ebenso wie bei herkömmlichen Förderketten sind auch die Kettenglieder der Gelenkanordnung erfindungsgemässer Förderketten zur Bereitstellung der Bewegbarkeit längs nur durch ihren Krümmungsradius begrenzte Kurvenführungen um zwei quer, insbes. etwa senkrecht, zueinander verlaufende Schwenkachsen gegeneinander verschwenkbar. Dazu können die Kettenglieder der Gelenkanordnung über eine ein Kugelsegment und ein Kugelschalensegment aufweisende Kugelgelenkanordnung miteinander verbunden sein. Im Sinne eines besonders kompakten Aufbaus erfindungsgemässer Förderketten hat es sich als zweckmässig erwiesen, wenn das Kugelsegment und das Kugelschalensegment an einem Einsteckbereich eines der Kettenglieder angebracht und zusammen mit dem Einsteckbereich in einem Aufnahmebereich des anderen Kettengliedes der Gelenkanordnung aufgenommen sind.

Zur sicheren Verbindung der Kettenglieder der Gelenkanordnung können das Kugelsegment und das Kugelschalensegment von einem den Aufnahmebereich des anderen Kettenglieds durchsetzenden Verbindungsbolzen durchsetzt werden. In diesem Fall wird bei der Montage also zunächst der das Kugelsegment und das Kugelschalensegment tragende Einsteckbereich des einen Kettenglieds der Gelenkanordnung in den Aufnahmebereich des anderen Kettenglieds eingesetzt und dann der Verbindungsbolzen durch eine das Kugelsegment, das Kugelschalensegment und den Aufnahmebereich durchsetzende Öffnung geführt, um so eine Verbindung zwischen den Kettengliedern herzustellen, bei der das Kugelsegment bezüglich der den Aufnahmebereich aufweisenden Kettenglieder mit Hilfe des Bolzens fixiert sein kann, während das Kugelschalensegment zusammen mit dem Einsteckbereich des entsprechenden Kettenglieds um das Kugelsegment verschwenkt werden kann, um so eine Verschwenkbarkeit des den Einsteckbereich aufweisenden Kettenglieds bezüglich dem den Aufnahmebereich aufweisenden Kettenglied zu ermöglichen.

Im Sinne einer besonders hohen Verschleissfestigkeit erfindungsgemässer Förderketten hat es sich als zweckmässig erwiesen, wenn das Kugelsegment aus einem metallischen Werkstoff gebildet ist, wobei das Kugelschalensegment aus einem Kunststoff mit geringem Reibungskoeffizienten, wie beispielsweise einem Polyamid und/oder einem teflonhaltigen Kunststoff, gebildet sein kann, wobei es im Sinne einer besonders einfachen Herstellung zweckmässig ist, wenn der Einsteckbereich derart form- und/oder stoffschlüssig mit dem Einsteckbereich ausgeführt ist, dass der Einsteckbereich zusammen mit dem Kugelschalensegment bezüglich dem Kugelsegment drehbar gelagert ist. Der Einsteckbereich kann bspw. durch Umspritzen des Kugelsegmentbereichs mit einem vorzugsweise faserverstärkten Kunststoff gebildet sein. Das Kugelschalensegment kann durch vorgefertigte ein-, zwei- oder mehrteilige Schalen gebildet werden, die um das Kugelsegment gelegt werden, wobei an einander zugewandten Stirnflächen der Teilschalen, allenfalls mit Zentrierungsmitteln, vorgesehen sein können. Im Sinne einer Führung der Verschwenkbewegung der Kettenglieder bezüglich der Bolzenachse des den Einsteckbereich mit dem Aufnahmebereich verbindenden Bolzens kann der Einsteckbereich als Kreisscheibensegment einer die Bolzenachse umlaufenden Kreisscheibe ausgeführt sein, wobei auch die der Bolzenachse zugewandte Begrenzungsfläche des Aufnahmebereichs als Kreisscheibenschalensegment ausgeführt sein kann.

Erfindungsgemässe Förderketten können unter Vermeidung einer übermässigen Anzahl unterschiedlicher Bauelemente und einer entsprechenden Lagerhaltung besonders einfach hergestellt werden, wenn eine Funktionseinheit der Gelenkanordnung als erstes Kettengliedes der Funktionsanordnung und/oder die andere Funktionseinheit der Gelenkanordnung als zweites Kettenglied der Funktionsanordnung ausgeführt ist.

Die Verbindung der einzelnen Funktionseinheiten der Gelenkanordnung kann bei dieser Ausführungsform der Erfindung unter Vermeidung einer Beeinflussung der Ankopplung der Antriebseinrichtung an die Förderkette sicher und zuverlässig ausgeführt werden, wenn der Einsteckbereich einen sich quer zur die Kettenglieder der Funktionsanordnung miteinander verbindende Bolzen und vorzugsweise etwa längs der Förderrichtung erstreckenden Ansatz des ersten Kettengliedes aufweist. Der kreisscheibensegmentförmige Einsteckbereich kann zur Sicherstellung einer genügenden Steifigkeit bei Belastung durch die daran und üblicherweise unterhalb davon angebrachten Lasten in einer durch die Förderrichtung und die Schraubbolzenachse aufgespannten Ebene angeordnet sein. Dabei kann der Aufnahmebereich von mindestens einer Rollenachse durchsetzt sein, wobei sich die Verbindungsbolzenachse etwa parallel, vorzugsweise etwa kolinear, zur zweiten Rollenachse erstreckt, während die erste Rollenachse in der Ebene des kreisscheibensegmentförmigen Einsteckbereichs angeordnet ist. In diesem Fall ist der Einsteckbereich zwischen den Führungszapfen des zweiten Funktionselements angeordnet, auf denen die sich bezüglich der ersten Rollenachse drehbar gelagerten Führungsrollen angebracht sind.

Eine erfindungemässe Förderkette kann durch aufeinanderfolgende Gelenkanordnungen und Funktionsanordnungen bereitgestellt werden, wenn jeweils ein erstes Kettenglied zwischen zwei zweiten Kettengliedern angeordnet und einerseits gelenkig mit einem der ersten Kettenglied und andererseits starr mit dem anderen der ersten Kettenglieder verbunden ist. Weitere vorteilhafte aufgabengemässe Ausführungsvarianten gehen aus den abhängigen Ansprüchen hervor.

### Kurze Beschreibung der Figuren

Nachstehend wird die Erfindung unter Bezugnahme auf die Zeichnung, auf die hinsichtlich aller erfindungswesentlichen und in der Beschreibung nicht näher herausgestellten Einzelheiten ausdrücklich Bezug genommen wird, erläutert. Alle für das unmittelbare Verständnis der Erfindung nicht wesentlichen Elemente sind fortgelassen worden, Gleiche Elemente sind in den verschiedenen Figuren mit den gleichen Bezugszeichen versehen. In der Zeichnung zeigt:

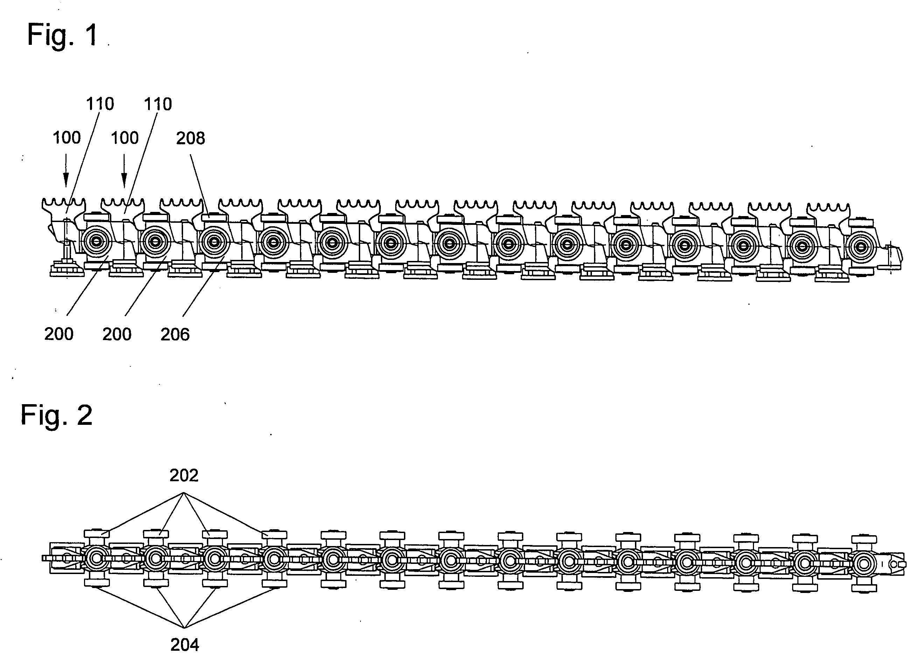

- **Fig. 1**: eine Seitenansicht einer erfindungsgemässen Förderkette,
- **Fig. 2**: eine Draufsicht auf eine erfindungsgemässe Förderkette,
- **Fig.3**: eine Schnittdarstellung einer Funktionsanordnung einer erfindungsgemässen För- derkette,
- **Fig. 4**: eine perspektivische Darstellung einer Gelenkanordnung einer erfindungsgemässen Förderkette,
- **Fig. 5**: eine erste Schnittdarstellung einer Gelenkanordnung einer erfindungsgemässen Förderkette,
- **Fig. 6**: eine zweite Schnittdarstellung einer Gelenkanordnung einer erfindungsgemässen Förderkette,
- **Fig. 7**: eine die Montage erfindungsgemässer Förderketten verdeutlichende Darstellung,
- **Fig. 8**: eine Seitenansicht eines ersten Funktionsglieds erfindungsgemässer Förderketten,
- **Fig. 9**: eine erste Schnittdarstellung des in Fig. 4a) dargestellten ersten Funktionsglieds,
- **Fig. 10**: eine zweite Schnittdarstellung des in Fig. 4a) dargestellten ersten Funktionsglieds und
- **Fig. 11**: eine die Ankopplung einer Antriebseinrichtung an eine erfindungsgemässe Förder- kette darstellende Seitenansicht.

### Erläuterung von Ausführungsbeispielen der Erfindung

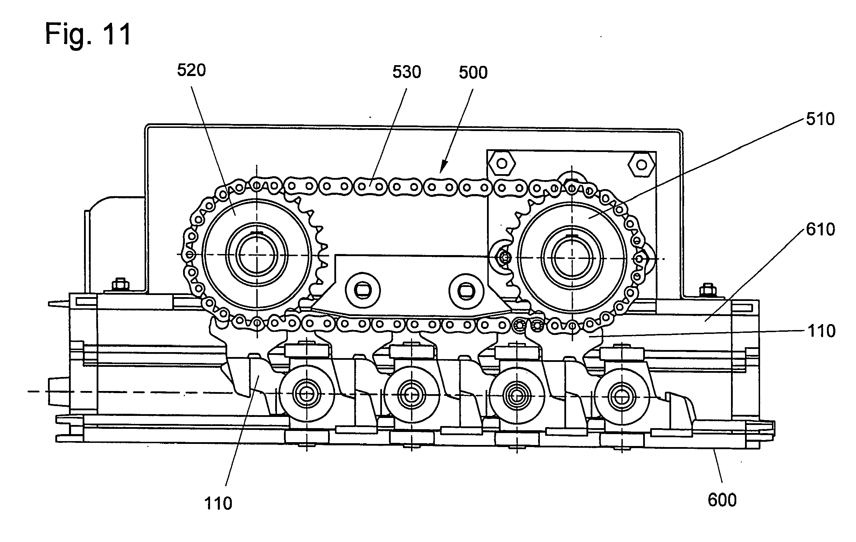

Die in der Zeichnung dargestellte Förderkette umfasst Funktionsglieder in Form von ersten Kettengliedern 100 und zweiten Kettengliedern 200. Jedes der ersten Kettenglieder 100 weist einen kammförmig ausgeführten Ankopplungsbereich 110 zum Ankoppeln der Förderkette an eine Antriebskette 530 (vgl. Fig. 11) auf. Jedes der zweiten Kettenglieder 200 weist insgesamt vier Führungsrollen 202, 204, 206, 208 auf, wobei die Führungsrollen 206 und 208 bezüglich einer ersten gemeinsamen Rollenachse drehbar gelagert sind und die Führungsrollen 202, 204 bezüglich einer zweiten gemeinsamen Rollenachse drehbar gelagert sind. Die erste und die zweite Rollenachse verlaufen senkrecht zueinander und sind in einer Ebene angeordnet. Jedes der ersten Kettenglieder 100 ist zwischen zwei zweiten Kettengliedern 200 angeordnet. Dabei ist jedes der ersten Kettenglieder 100 einerseits zur Bildung einer Funktionsanordnung starr mit einem der zweiten Kettengleider 200 und andererseits zur Bildung einer Gelenkanordnung mit dem anderen der zweiten Kettenglieder 200 verbunden.

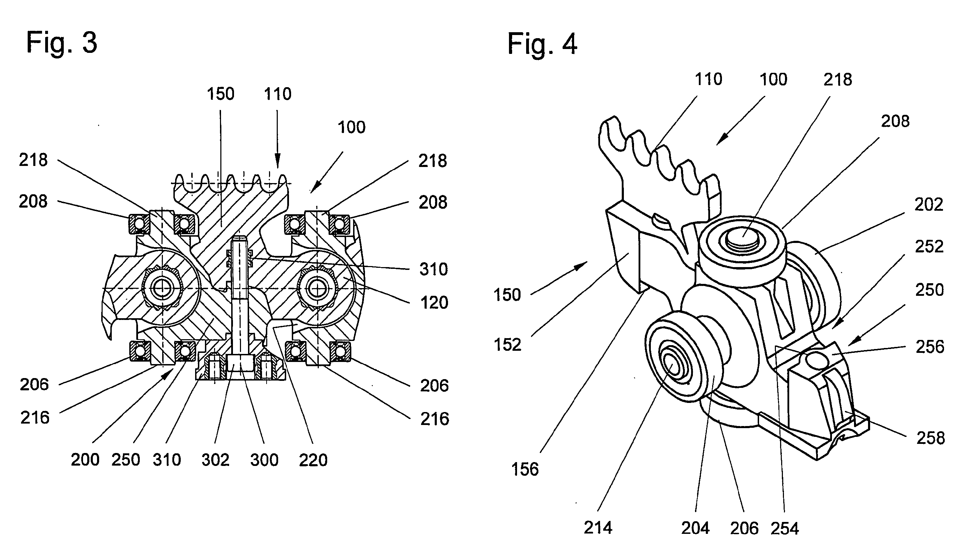

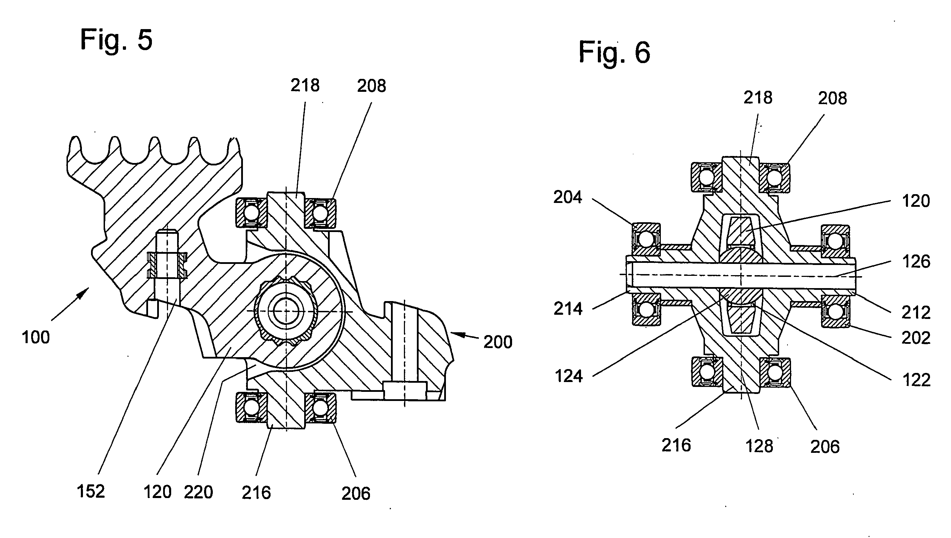

Die zur Bildung der Funktionsanordnung führende starre Verbindung zwischen ersten Kettengliedern 100 und zweiten Kettengliedern 200 ist in Fig. 3 dargestellt. Danach wird zur Verbindung der ersten Kettenglieder 100 mit den zweiten Kettengliedern 200 ein Schraubbolzen 300 eingesetzt, der eine Bohrung in einem Verbindungsbereich 250 des zweiten Kettengliedes 200 durchsetzt und in einen Verbindungsbereich 150 des ersten Kettengliedes 100 eingeschraubt ist. Dazu ist in dem ersten Kettenglied 100 ein Sackloch 152 gebildet, in dem ein Gewindeeinsatz 310 eingesetzt ist, der von dem Schraubbolzen 300 durchsetzt wird. Das Sackloch 152 ist gemäss Fig. 5 unterhalb des Ankopplungsbereichs 110 angeordnet, wobei sämtliche Führungsrollen 202, 204, 206, 208 nach Verbindung des ersten Kettengliedes 100 mit dem zweiten Kettenglied 200 auf der dem Bolzenkopf 302 des Schraubbolzens 300 zugewandten Seite des Ankopplungsbereichs 110 angeordnet sind, so dass der Ankopplungsbereich 110 ausserhalb der Führungsrollen 202, 204, 206, 208 frei zugänglich ist. Der Bolzenkopf 302 liegt auf der dem Ankopplungsbereich 110 abgewandten Seite des zweiten Kettengliedes 200 unter Zwischenschaltung einer Verbindungseinrichtung 310 an. Die Verbindungseinrichtung 310 dient zur Ankopplung von Funktionseinrichtungen, wie etwa Greifer- oder Klammerelementen, an die Förderkette.

Wie besonders deutlich in Fig. 4 zu erkennen ist, weist der Verbindungsbereich 250 des ersten Kettengliedes 100 einen Vorsprung 256 und eine rinnenförmige Ausnehmung 252 auf, in die eine Auswölbung 254 des Vorsprungs 256 hineinragt, während der Verbindungsbereich 150 des ersten Kettengliedes 100 komplementär dazu mit einem in die rinnenförmige Ausnehmung 252 eingreifenden Vorsprung 152 und eine den Vorsprung 256 aufnehmenden Einbuchtung 156 ausgeführt ist, wobei der Vorsprung 152 auch noch eine die Ausbuchtung 254 aufnehmende Einbuchtung aufweist, so dass durch Ineinanderstecken des Verbindungsbereichs 150 des ersten Kettengliedes 100 in den Verbindungsbereich 250 des zweiten Kettengliedes 200 eine formschlüssige Verbindung zwischen dem ersten Kettenglied 100 und dem zweiten Kettenglied 200 hergestellt wird, die durch den den Vorsprung 256 durchsetzenden und in die zwischen der Einbuchtung 156 und dem Ankopplungsbereich 110 des ersten Kettengliedes 100 gebildeten Sackloch 152 eingeführten Schraubbolzen 300 (Siehe Fig. 3) arretiert werden kann. Zur weiteren Lagesicherung der formschlüssigen Verbindung zwischen dem ersten Verbindungsbereich 150 und dem zweiten Verbindungsbereich 250 weist der Vorsprung 256 auch noch einen nasenartigen Eingreifbereich 258 auf, welcher in eine Einbuchtung in der Ausnehmung 156 eingreift.

Gemäss Fig. 3 ist der Ankopplungsbereich 110 kammartig mit sich quer zur Förderrichtung und etwa parallel zur Achse des Schraubbolzens 300 erstreckenden Kammzinken ausgeführt, wobei zwischen den Kammzinken ein Zwischenraum gebildet ist, in den die Kettenbolzen der Antriebskette 530 (Siehe Fig. 11) eingreifen. Die Führungsrollen 202, 204, 206, 208 sind auf Führungszapfen 212, 214, 216, 218 drehbar gelagert, so dass zwischen den Führungszapfen 212, 214, 216, 218 noch Bauraum zur Herstellung einer gelenkigen Verbindung zwischen ersten Kettengliedern 100 und zweiten Kettengliedern 200 zur Verfügung steht. Die durch die gelenkige Verbindung zwischen den ersten Kettengliedern 100 und den zweiten Kettengliedern 200 hergestellte Gelenkanordnung wird anhand der Fig. 3-6 erläutert.

Gemäss Fig. 4 und 5 weist das erste Kettenglied 100 ein sich in Förderrichtung quer zur Bolzenachse erstreckenden Einsteckbereich 120 auf, der in einem zwischen den Führungszapfen 212, 214, 216, 218 des ersten Kettengliedes 100 gebildeten Aufnahmebereich 220 aufgenommen ist. Der Einsteckbereich 120 ist kreisscheibensegmentförmig ausgeführt, während der Aufnahmebereich 220 kreisscheibensegmentschalenförmig ausgeführt ist, so dass durch die Begrenzungsflächen des Einsteckbereichs 120 und des Aufnahmebereichs 220 eine Führung für eine Schwenkbewegung des ersten Funktionsglieds 100 bezüglich dem zweiten Funktionsglied 200 um eine durch die zweite Rollenachse gebildete Schwenkachse gebildet ist.

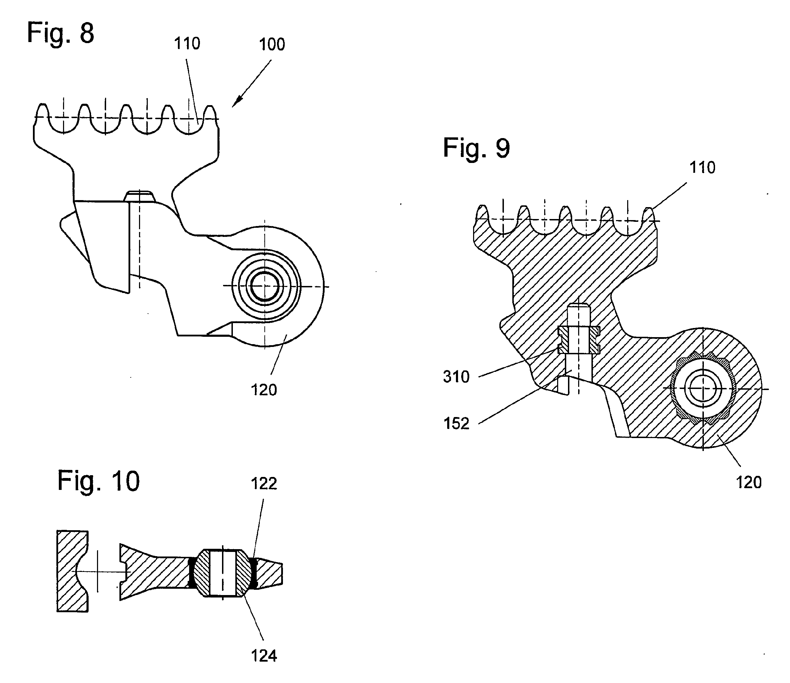

Gemäss Fig. 6 weist die gelenkige Verbindung zwischen dem ersten Kettenglied 100 und dem zweiten Kettenglied 200 ein in dem Einsteckbereich 120 aufgenommenes Kugelsegment 124 auf, wobei zwischen dem Kugelsegment 124 und dem Aussenbereich des Einsteckbereichs 120 ein kugelschalensegmentförmiges Gleitelement 122 aus einem Kunststoffmaterial mit einem geringen Gleitreibungskoeffizienten angeordnet ist. Kugelsegment 124 und Kugelschalensegment 122 durchsetzen den Einsteckbereich 120. Der das Kugelsegment 124 aufnehmende Einsteckbereich 120 wird über das Kugelschalensegment 122 drehbar auf dem Kugelsegment 124 gelagert (Siehe Fig. 10), so dass das erste Kettenglied 100 mit dem Einsteckbereich 120 nach Einstecken des Einsteckbereichs 120 in den Aufnahmebereich 220 bezüglich der Achse des Verbindungsbolzens 126 und einer senkrecht dazu und parallel zum Schraubbolzen 130 verlaufenden Achse 128 verschwenkbar gelagert ist, wobei die Verschwenkbewegung bezüglich der Schwenkachse 128 durch die Breite des Aufnahmebereichs 220 in der durch die Achse des Bolzens 126 bestimmten Richtung festgelegt wird. Bei Bedarf kann diese Breite vergrössert werden.

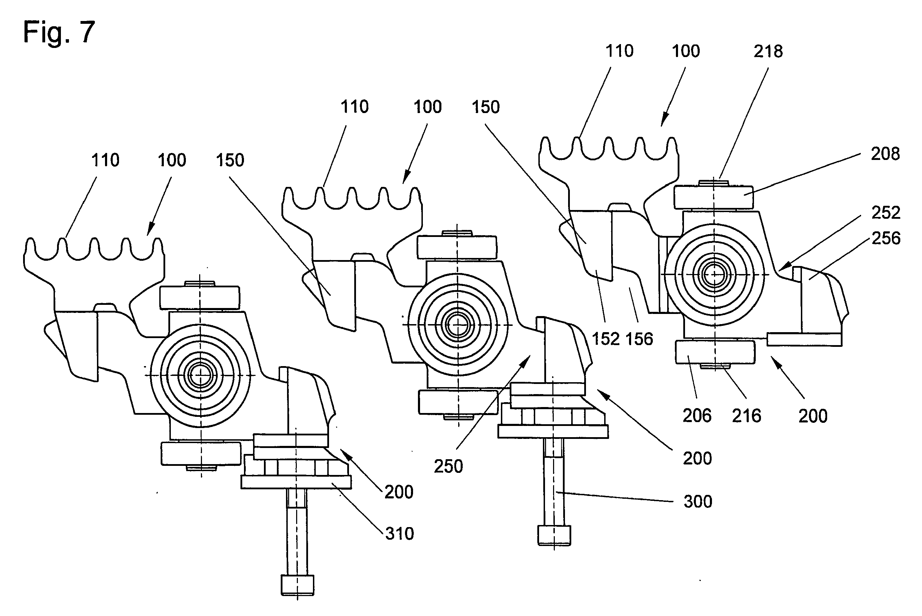

Fig. 7 zeigt eine erfindungsgemässe montierte Förderketten, wobei diese Figur weiter unten näher erläutert wird.

In Fig. 8 ist das erste Kettenglied 100 im Detail dargestellt. Dabei ist der Einsteckbereich 120 des ersten Kettenglied 100 gemäss Fig. 10 durch teilweises Ummanteln des Kugelsegments 124 mit einem Kunststoffmaterial geringer Reibung zur Bildung eines Kugelschalensegments 122 ausgeführt, wobei das so gebildete Kugelsegment 124 zur Bildung des Einsteckbereichs 120 mit einem Kunststoff, insbes. einem faserverstärkten Kunststoff, umspritzt werden kann. Das Kugelschalensegment 122 ist einteilig ausgebildet, kann auch zwei- oder mehrteilig sein. Bei diesem Spritzvorgang können gleichzeitig auch der Verbindungsbereich 150 und der Ankopplungsbereich 110 gebildet werden, wobei auch daran gedacht ist, während des Spritzvorgangs den Gewindeeinsatz 310 in das Sackloch 152 einzusetzen. Gemäss Fig. 7 können erfindungsgemässe Förderketten montiert werden, indem zunächst Gelenkanordnungen aus ersten Funktionsgliedern 100 und zweiten Funktionsgliedern 200 vormontiert, dann in den Verbindungsbereichen 150 bzw. 250 zusammengesteckt und anschliessend mit Hilfe der Schraubbolzen 300 arretiert werden.

Gemäss Fig. 11 können erfindungsgemässe Förderketten längs einer durch eine Führungsschienenanordnung 600 gebildete Förderstrecke gefördert werden, wobei die Förderkette innerhalb der Führungsschiene 600 aufgenommen ist und mit Hilfe der Führungsrollen 202, 204, 206, 208 an entsprechenden Laufflächen der Führungsschiene 600 geführt ist. Die Ankopplungsbereiche 110 sind in einem Antriebsraum 610 der Führungsschienen 600 aufgenommen und kämmen in Antriebsabschnitten der Führungsschienenanordnung 600 eine Antriebskette 530 einer Antriebseinrichtung 500, die zwei Kettenräder 510 und 520 umläuft. Zur Ankopplung der Antriebseinrichtung 530 muss lediglich eine Ausnehmung in einer Begrenzungsfläche des Antriebsraums 610 hergestellt werden, durch die die Antriebskette 530 in den Bereich der Ankopplungsbereiche 110 gelangen kann.

Die Erfindung ist nicht auf das anhand der Zeichnung erläuterte Ausführungsbeispiel beschränkt. Vielmehr ist auch an Förderketten mit anders ausgestalteten Führungsschienenanordnungen mit drei oder weniger Führungsrollen, Führungszapfen od. dgl. gedacht. Ferner können die Ankopplungsbereiche der Förderkette anders ausgestaltet sein. Auch ist an die kardanische Verbindung einzelner Kettenglieder zur Bildung von Gelenkanordnungen gedacht.

Insbesondere wird hier auf die leicht verständlichen Möglichkeiten hingewiesen, soweit sie in der weiteren Beschreibung nicht bereits erläutert worden sind, wonach die Funktionseinheiten, welche jeweils wie erwähnt aus einem ersten Kettenglied und einem zweiten Kettenglied bestehen, wobei diese in Wirkverbindung zueinander stehen, in ihrer Sequenz zur Bildung einer Förderkette kongruent oder quasi-kongruent oder ähnlich oder gemäss ihrer Funktionalität unterschiedlich aufgebaut sein können, wobei die unterschiedlichen Funktionen der beiden Kettenglieder sowie die Kopplungsmöglichkeiten zueinander natürlich erhalten bleiben. Indessen ist es auch möglich, nach einem ersten Kettenglied nicht unmittelbar nur ein zweites Kettenglied folgen zu lassen, sondern nach Bedarf beispielweise nach einem ersten Kettenglied zwei oder mehrere zweite Kettenglieder folgen zu lassen, oder umgekehrt, nämlich zwei oder mehrere erste Kettenglieder hintereinander zu koppeln. Die sequentiell angeordneten Funktionseinheiten weisen dann Mittel oder Verbindungselemente für eine lösbare, oder eine durch Kraftschluss bedingte lösbare, und/oder eine nicht lösbare Verbindung auf. Dies bedeutet zum einen, dass die geometrische und funktionale Ausgestaltung der einzelnen Führungseinheiten über die ganze Förderkette nicht eine Einheitliche sein muss. Intermediäre betriebsbedingte Variationen sind also möglich. Zum anderen wird hervorgehoben, dass die Funktionseinheiten zueinander zur Bildung der Förderkette unterschiedlich miteinander verbunden sein können. In den meisten Fällen wird man hier für eine lösbare Verbindung, beispielsweise eine Schraubverbindung, optieren. Indessen ist es auch möglich, ein durch Kraftschluss bedingter Zusammenschluss vorzusehen, welche sich bei Bedarf dann wie eine lösbare Verbindung verhält. Schliesslich soll auch nicht ausgeschlossen bleiben, dass die einzelnen Fördereinheiten durch eine nicht lösbare Verbindung, beispielsweise über eine Schweissverbindung, fest miteinander verbunden werden können. Diese Ausführungsmöglichkeiten sind in den verschiedenen Figuren nicht detailliert darstellt, da sie jedem Fachmann geläufig sind.

## Patentansprüche

1. Transportorgan zum Fördern von Druckprodukten, wobei das Transportorgan im wesentlichen aus einer für eine vorgegebene Strecke konzipierte Förderkette besteht, welche im wesentlichen aus einer Anzahl von miteinander koppelbaren und sequentiell angeordneten Funktionseinheiten besteht, wobei die Funktionseinheiten zueinander eine starre und/oder gelenkige Verbindung aufweisen, wobei die einzelne Funktionseinheit aus einem ersten Kettenglied (100) und einem zweiten Kettenglied (200) besteht, welche Kettenglieder (100, 200) in Wirkverbindung zueinander stehen und sich funktional voneinander unterscheiden, wobei die Funktionseinheiten in ihrer Sequenz zur Bildung einer Förderkette kongruent oder quasi-kongruent oder ähnlich oder gemäss ihrer Funktionalität unterschiedlich aufgebaut sind, und wobei die Funktionseinheiten Mittel oder Verbindungselemente für eine lösbare, oder eine durch Kraftschluss bedingte lösbare, und/oder eine nicht lösbare Verbindung aufweisen, **dadurch gekennzeichnet, dass** das zweite Kettenglied (200) vier Führungsrollen aufweist, dass ein erstes paar Führungsrollen (206, 208) bezüglich einer gemeinsamen, quer, senkrecht oder quasi senkrecht zur Förderstrecke verlaufenden ersten Rollenachse (218) drehbar gelagert sind, und dass ein zweites paar Führungsrolle (202, 204) bezüglich einer quer, senkrecht oder quasi-senkrecht zu der durch die Förderrichtung und die erste Rollenachse aufgespannten Ebene gemeinsamen zweiten Rollenachse (214) drehbar gelagert sind, und dass die erste Rollenachse (218) und die zweite Rollenachse (214) eine rechtwinklig oder quasirechtwinklig zur Förderrichtung stehende Ebene aufspannen.

2. Transportorgan nach Anspruch 1, **dadurch gekennzeichnet, dass** jeweils ein erstes Kettenglied (100) zwischen zwei zweiten Kettengliedern (200) angeordnet ist, dass das erste Kettenglied (100) gelenkig mit den beiden anderen zweiten Kettengliedern (200) gekoppelt ist, oder dass das erste Kettenglied (100) einerseits gelenkig mit einem ersten der zweiten Kettenglieder (200) und andererseits starr mit dem zweiten der zweiten Kettenglieder (200) gekoppelt ist.

3. Transportorgan nach Anspruch 1, **dadurch gekennzeichnet, dass** jeweils ein zweites Kettenglied (200) zwischen zwei ersten Kettengliedern (100) angeordnet ist, dass das zweite Kettenglied (200) gelenkig mit den beiden anderen ersten Kettengliedern (100) gekoppelt ist, oder dass das zweite Kettenglied (200) einerseits gelenkig mit einem der ersten Kettenglieder (100) und andererseits starr mit dem anderen der ersten Kettenglieder (100) gekoppelt ist.

4. Transportorgan nach Anspruch 1, **dadurch gekennzeichnet, dass** das erste Kettenglied (100) einen zum Ankoppeln der Förderkette an eine Antriebseinrichtung ausgelegten Ankopplungsbereich (110).

5. Transportorgan nach Anspruch 4, **dadurch gekennzeichnet, dass** der Ankopplungsbereich (110) kammartig mit sich quer, senkrecht oder quasi-senkrecht zur Richtung der Förderstrecke erstreckenden Kammzinken ausgeführt ist.

6. Transportorgan nach Anspruch 4, **dadurch gekennzeichnet, dass** die lösbare Verbindung des ersten Kettengliedes (100) mit dem zweiten Kettenglied (200) an der abgewandten Seite des Ankopplungsbereiches (110) angeordnet ist.

7. Transportorgan nach Anspruch 1, **dadurch gekennzeichnet, dass** die lösbare Verbindung des ersten Kettengliedes (100) mit dem zweiten Kettenglied (200) einer zweiten Funktionseinheit durch einen Schraubenbolzen (300) bewerkstelligt ist.

8. Transportorgan nach einem der Ansprüche 1 bis 7, **dadurch gekennzeichnet, dass** die Kettenglieder (100, 200) um mindestens zwei Schwenkachsen gegeneinander verschwenkbar sind.

9. Transportorgan nach Anspruch 8, **dadurch gekennzeichnet, dass** die Kettenglieder (100, 200) über eine ein Kugelsegment (124) und ein ein-, zwei-, oder mehrteiliges Kugelschalensegment (122) aufweisende Kugelgelenkanordnung miteinander verbunden sind.

10. Transportorgan nach Anspruch 9, **dadurch gekennzeichnet, dass** das Kugelsegment (124) und das Kugelschalensegment (122) an einem Einsteckbereich (120) eines der Kettenglieder (100) angebracht und zusammen mit dem Einsteckbereich (120) in einem Aufnahmebereich (220) des anderen Kettenglieds (200) aufgenommen sind.

11. Transportorgan nach Anspruch 10, **dadurch gekennzeichnet, dass** das Kugelsegment (124) und das Kugelschalensegment (122) von einem den Aufnahmebereich (220) des anderen Kettenglieds (200) durchsetzenden Verbindungsbolzen (126) durchsetzt sind.

12. Transportorgan nach einem der Ansprüche 9 bis 11, **dadurch gekennzeichnet, dass** das Kugelsegment (124) aus einem metallischen Werkstoff gebildet ist, das Kugelschalensegment (122) aus einem Kunststoff mit geringem Reibungskoeffizienten gebildet ist und der Einsteckbereich (120) derart form- und/oder stoffschlüssig mit dem Kugelschalensegment (122) ausgeführt ist, dass der Einsteckbereich (120) zusammen mit dem Kugelschalensegment (122) bezüglich dem Kugelsegment (124) drehbar gelagert ist.

13. Transportorgan nach Anspruch 12, **dadurch gekennzeichnet, dass** der Einsteckbereich (120) durch Umspritzten des Kugelschalensegments (122) mit einem Kunststoff oder einem faserverstärkten Kunststoff gebildet ist.

14. Transportorgan nach einem der Ansprüche 11-13, **dadurch gekennzeichnet, dass** der Einsteckbereich (120) ein Kreisscheibensegment einer die Bolzenachse umlaufenden Kreisscheibe aufweist.

15. Transportorgan nach den Ansprüchen 1 und 14, **dadurch gekennzeichnet, dass** der Einsteckbereich (120) einen sich quer zum Verbindungsbolzen (126) und vorzugsweise etwa längs der Förderstrecke erstreckenden Ansatz des ersten Kettengliedes (100) aufweist.

16. Transportorgan nach Anspruch 15, **dadurch gekennzeichnet, dass** der Einsteckbereich (120) sich in einer durch die Förderrichtung und die Schraubbolzenachse aufgespannten Ebene erstreckt.

17. Transportorgan nach einem der Ansprüche11-16, **dadurch gekennzeichnet, dass** der Aufnahmebereich (220) von mindestens einer Rollenachse durchsetzt ist.

18. Transportorgan nach einem der Ansprüche 15-17, **dadurch gekennzeichnet, dass** die Achse des Verbindungsbolzens (126) etwa parallel, vorzugsweise etwa kolinear, zur zweiten Rollenachse verlauft.

## Claims

1. Transport device for conveying printed products, wherein the transport device consists essentially of a conveyor chain designed for a predetermined section and consisting essentially of a number of sequentially arranged functional units that can be coupled together, wherein the functional units are connected together by means of a rigid and/or a hinged connection, wherein the individual functional unit consists of a first chain link (100) and a second chain link (200), the said chain links (100, 200) being operatively connected to one another and differing from one another in terms of their functions, wherein, in their sequence for forming a conveyor chain, the functional units are designed to be congruent or quasi-congruent or the like or to differ according to their functionality and wherein the functional units comprise means or connecting elements for a releasable connection or a releasable frictional connection and/or a non-releasable connection, **characterised in that** the second chain link (200) comprises four guide rollers, that a first pair of guide rollers (206, 208) are rotatably supported in relation to a common first roller axis (218) extending transversely, perpendicularly or quasi-perpendicularly to the conveying section, that a second pair of guide rollers (202, 204) are rotatably supported in relation to a common second roller axis (214) extending transversely, perpendicularly or quasi-perpendicularly to the plane delimited by the conveying direction and the first roller axis and that the first roller axis (218) and the second roller axis (214) delimit a plane extending perpendicularly or quasi-perpendicularly to the conveying direction.

2. Transport device according to claim 1, **characterised in that** a first chain link (100) is arranged between two second chain links (200), that the first chain link (100) is hinged to the two other second chain links (200) or that the first chain link (100) is hinged on one side to a first of the second chain links (200) and rigidly coupled on the other side to the second of the second chain links (200).

3. Transport device according to claim 1, **characterised in that** a second chain link (200) is arranged between two first chain links (100), that the second chain link (200) is hinged to the two other first chain links (100) or that the second chain link (200) is hinged on one side to one of the first chain links (100) and rigidly coupled on the other side to the other of the first chain links (100).

4. Transport device according to claim 1, **characterised in that** the first chain link (100) comprises a coupling region (110) designed for coupling the conveyor chain to a drive device.

5. Transport device according to claim 4, **characterised in that** the coupling region (110) is designed like a comb with teeth extending transversely, perpendicularly or quasi-perpendicularly to the direction of the conveying section.

6. Transport device according to claim 4, **characterised in that** the releasable connection between the first chain link (100) and the second chain link (200) is arranged on the remote side of the coupling region (110).

7. Transport device according to claim 1, **characterised in that** the releasable connection between the first chain link (100) and the second chain link (200) of a second functional unit is produced by a screw bolt (300).

8. Transport device according to one of claims 1 to 7, **characterised in that** the chain links (100, 200) can pivot relative to one another about at least two pivot axes.

9. Transport device according to claim 8, **characterised in that** the chain links (100, 200) are connected to one another by means of a ball-joint arrangement comprising a spherical segment (124) and a one-part, two-part or multi-part spherical shell segment (122).

10. Transport device according to claim 9, **characterised in that** the spherical segment (124) and the spherical shell segment (122) are attached to an insertion region (120) of one of the chain links (100) and are received in a receiving region (220) of the other chain link (200) together with the insertion region (120).

11. Transport device according to claim 10, **characterised in that** the spherical segment (124) and the spherical shell segment (122) are traversed by a connecting bolt (126) traversing the receiving region (220) of the other chain link (200).

12. Transport device according to one of claims 9 to 11, **characterised in that** the spherical segment (124) is formed of a metallic material, the spherical shell segment (122) is formed of a plastic material having a low coefficient of friction and the insertion region (120) is joined positively to and/or formed integrally with the spherical shell segment (122) in such a manner that the insertion region (120), together with the spherical shell segment (122), is rotatably supported in relation to the spherical segment (124).

13. Transport device according to claim 12, **characterised in that** the insertion region (120) is formed by injection moulding a plastic or fibre-reinforced plastic material around the spherical shell segment (122).

14. Transport device according to one of claims 11-13, **characterised in that** the insertion region (120) comprises a segment of a circular disc surrounding the bolt axis.

15. Transport device according to claims 1 and 14, **characterised in that** the insertion region (120) comprises a projection of the first chain link (100) extending transversely to the connecting bolt (126) and preferably approximately along the conveying section.

16. Transport device according to claim 15, **characterised in that** the insertion region (120) extends in a plane delimited by the conveying direction and the screw bolt axis.

17. Transport device according to one of claims 11-16, **characterised in that** the receiving region (220) is traversed by at least one roller axis.

18. Transport device according to one of claims 15-17, **characterised in that** the axis of the connecting bolt (126) extends approximately parallel to, preferably approximately collinearly with the second roller axis.

## Revendications

1. Organe de transport destiné au convoyage de produits imprimés, ledit organe de transport se présentant pour l'essentiel comme une chaîne convoyeuse conçue pour parcourir un trajet préétabli et constituée, pour l'essentiel, d'un certain nombre d'unités fonctionnelles pouvant être accouplées les unes aux autres et agencées séquentiellement, lesdites unités fonctionnelles étant reliées les unes aux autres par une solidarisation rigide et/ou articulée, l'unité fonctionnelle individuelle étant composée d'un premier chaînon (100) et d'un second chaînon (200), lesquels chaînons (100, 200) sont en liaison mutuelle opérante et exercent des fonctions mutuellement différentes, sachant que, dans leur agencement séquentiel visant à former une chaîne convoyeuse, les unités fonctionnelles sont structurées avec symétrie complémentaire ou quasiment complémentaire, voire de manière similaire, ou de manière différente conformément à leur fonctionnalité, et sachant que lesdites unités fonctionnelles comportent des moyens ou des éléments de solidarisation dévolus à une liaison libérable ou dissociable par engagement positif, et/ou non dissociable, **caractérisé par le fait que** le second chaînon (200) présente quatre rouleaux de guidage ; **par le fait qu'**une première paire de rouleaux de guidage (206, 208) est montée à rotation par rapport à un premier axe commun (218) de rouleaux s'étendant transversalement, perpendiculairement ou quasi perpendiculairement au trajet de convoyage ; **par le fait qu'**une seconde paire de rouleaux de guidage (202, 204) est montée à rotation par rapport à un second axe commun (214) s'étendant transversalement, perpendiculairement ou quasi perpendiculairement au plan sous-tendu par la direction du convoyage et par ledit premier axe de rouleaux ; et **par le fait que** le premier axe (218) de rouleaux et le second axe (214) de rouleaux sous-tendent un plan décrivant un angle droit, ou quasiment un angle droit avec ladite direction du convoyage.

2. Organe de transport selon la revendication 1, **caractérisé par le fait qu'**un premier chaînon (100) est respectivement interposé entre deux seconds chaînons (200) ; **par le fait que** ledit premier chaînon (100) est accouplé aux deux autres seconds chaînons (200), de manière articulée ; ou **par le fait que** ledit premier chaînon (100) est accouplé d'une part, de manière articulée, à un premier chaînon parmi les seconds chaînons (200), et est accouplé d'autre part, de façon rigide, au second chaînon parmi lesdits seconds chaînons (200).

3. Organe de transport selon la revendication 1, **caractérisé par le fait qu'**un second chaînon (200) est respectivement interposé entre deux premiers chaînons (100) ; **par le fait que** ledit second chaînon (200) est accouplé aux deux autres premiers chaînons (100), de manière articulée; ou **par le fait que** ledit second chaînon (200) est accouplé d'une part, de manière articulée, à l'un des premiers chaînons (100) et est accouplé d'autre part, de façon rigide, à l'autre desdits premiers chaînons (100).

4. Organe de transport selon la revendication 1, **caractérisé par le fait que** le premier chaînon (100) présente une zone d'accouplement (110) conçue pour accoupler la chaîne convoyeuse à un dispositif d'entraînement.

5. Organe de transport selon la revendication 4, **caractérisé par le fait que** la zone d'accouplement (110) est réalisée à la manière d'un peigne comportant des dents qui s'étendent transversalement, perpendiculairement ou quasi perpendiculairement à la direction du trajet de convoyage.

6. Organe de transport selon la revendication 4, **caractérisé par le fait que** la liaison libérable du premier chaînon (100) avec le second chaînon (200) est située du côté pointant à l'opposé de la zone d'accouplement (110).

7. Organe de transport selon la revendication 1, **caractérisé par le fait que** la liaison libérable du premier chaînon (100), avec le second chaînon (200) d'une seconde unité fonctionnelle, est instaurée par un boulon (300).

8. Organe de transport selon l'une des revendications 1 à 7, **caractérisé par le fait que** les chaînons (100, 200) peuvent pivoter réciproquement autour d'au moins deux axes de pivotement.

9. Organe de transport selon la revendication 8, **caractérisé par le fait que** les chaînons (100, 200) sont reliés mutuellement par un ensemble à articulation sphérique comprenant un segment sphérique (124) et un segment (122) en forme de coussinet sphérique en une, deux ou plusieurs partie(s).

10. Organe de transport selon la revendication 9, **caractérisé par le fait que** le segment sphérique (124), et le segment (122) en forme de coussinet sphérique, sont implantés dans une zone d'emboîtement (120) de l'un (100) des chaînons et sont logés, conjointement à ladite zone d'emboîtement (120), dans une zone réceptrice (220) de l'autre chaînon (200).

11. Organe de transport selon la revendication 10, **caractérisé par le fait que** le segment sphérique (124), et le segment (122) en forme de coussinet sphérique, sont traversés par un boulon de solidarisation (126) s'étendant à travers la zone réceptrice (220) de l'autre chaînon (200).

12. Organe de transport selon l'une des revendications 9 à 11, **caractérisé par le fait que** le segment sphérique (124) est constitué d'un matériau métallique, le segment (122) en forme de coussinet sphérique étant constitué d'une matière plastique à faible coefficient de frottement, et la zone d'emboîtement (120) faisant corps avec ledit segment (122) en forme de coussinet sphérique, avec liaison matérielle et/ou par concordance de formes, de façon telle que ladite zone d'emboîtement (120) soit montée à rotation par rapport audit segment sphérique (124), conjointement audit segment (122) en forme de coussinet sphérique.

13. Organe de transport selon la revendication 12, **caractérisé par le fait que** la zone d'emboîtement (120) est formée en enrobant le segment (122) en forme de coussinet sphérique, par injection, à l'aide d'une matière plastique ou d'une matière plastique armée de fibres.

14. Organe de transport selon l'une des revendications 11-13, **caractérisé par le fait que** la zone d'emboîtement (120) comporte un segment d'un disque circulaire ceinturant l'axe du boulon.

15. Organe de transport selon les revendications 1 et 14, **caractérisé par le fait que** la zone d'emboîtement (120) présente un appendice du premier chaînon (100) qui s'étend transversalement par rapport au boulon de solidarisation (126) et, de préférence, sensiblement le long du trajet de convoyage.

16. Organe de transport selon la revendication 15, **caractérisé par le fait que** la zone d'emboîtement (120) s'étend dans un plan sous-tendu par la direction du convoyage et par l'axe du boulon.

17. Organe de transport selon l'une des revendications 11-16, **caractérisé par le fait que** la zone réceptrice (220) est traversée par au moins un axe de rouleaux.

18. Organe de transport selon l'une des revendications 15-17, **caractérisé par le fait que** l'axe du boulon de solidarisation (126) s'étend à peu près parallèlement, de préférence à peu près colinéairement au second axe de rouleaux.
